# EUROPEAN PATENT APPLICATION

(11) **EP 1 612 383 A2**
(43) Date of publication of application: **04.01.2006**
(21) Application number: 05253991.3
(22) Date of filing: 27.06.2005
(51) Int. Cl.: F01N 3/28, F01N 7/18

(54) **Exhaust passage structure for vehicles**

(30) Priority: 30.06.2004 JP 2004194707
(71) Applicant: Toyota Jidosha Kabushiki Kaisha, Toyota-shi, Aichi-ken 471-8571 (JP)
(72) Inventor: Kihira, Kazuhide, c/o Toyota Jidosha K.K., Aichi-ken, 471-8571 (JP)
(74) Representative: Smith, Samuel Leonard

(57) **Abstract**

An exhaust passage structure for a vehicle provided with an internal combustion engine (10) includes an exhaust manifold (11) which bends at a bending portion (15) thereof and a catalytic converter (21, 22) provided downstream of the bending portion 15. A deformed portion 15c is provided at the bending portion to change a flow of the exhaust gas.

## Description

### BACKGROUND OF THE INVENTION

### 1. Field of the Invention

The invention relates to an exhaust passage structure for a vehicle provided with an internal combustion engine and a catalytic converter for purifying exhaust gas of the internal combustion engine.

### 2. Description of the Related Art

An example of such an exhaust passage structure for a vehicle is disclosed in Japanese Patent Application Publication No. JP(A) 7-324618. In this exhaust passage structure, referring to FIG. 3, a catalytic converter 51 is provided immediately downstream of an exhaust manifold 50 connected to an internal combustion engine. The catalytic converter 51 is housed in a catalyst case 52 which is connected to a downstream-side end portion of the exhaust manifold 50. The catalytic converter 51 is located beside the internal combustion engine such that the axis of the catalytic converter 51 extends in a substantially vertical direction so that the catalytic converter 51 can fit into a limited space in the engine room. Thus, the exhaust manifold 50 extends from the exhaust ports of the internal combustion engine in a substantially horizontal direction, and then sharply bends downward (bending portion 53) so as to be connected to the upper end of the catalyst case 52.

Thus, in the foregoing structure, after discharged from the exhaust port of the internal combustion engine, the exhaust gas flows in the horizontal direction within the exhaust manifold 50. Then, the flow direction of the exhaust gas sharply changes downward at the bending portion 53 of the exhaust manifold 50, and this result in the flow of the exhaust gas being biased to the side of an outer corner 53a of the bending portion 53 before the catalytic converter 51. More specifically, at the bending portion 53, the exhaust gas flow is biased to the side of the outer corner 53a with respect to the axis of the catalytic converter 51, and therefore the exhaust gas is not sufficiently introduced into a region of the catalytic converter 51 on the side of an inner corner 53b of the bending portion 53, which creates a portion R of the catalytic converter 51 that is not fully used for purifying the exhaust gas. Consequently, the purifying capability of the catalytic converter 51 is not fully used.

### SUMMARY OF THE INVENTION

In view of the above, it is an object of the invention to provide an exhaust passage structure for a vehicle provided with a catalytic converter, which can suppress a decrease in the purifying capability of the catalytic converter due to restricted layout of the exhaust passage.

In order to achieve the aforementioned object, one aspect of the invention relates to an exhaust passage structure for a vehicle which includes an exhaust passage member which forms a portion of an exhaust passage for an exhaust gas of the internal combustion engine and which bends at a particular portion thereof, and a catalytic converter that is provided in or along the exhaust passage downstream of the bending portion of the exhaust passage member.

In the foregoing exhaust passage structure, the exhaust gas flow which has been biased to one side (i.e., outer side) of the exhaust passage member while passing through the bending portion is guided back towards the other side (i.e., inner side) by the exhaust flow guide. As a result, the exhaust gas flow is directed to the center portion of the catalytic converter, enabling introduction of the exhaust gas into the entire portion of the catalytic converter. Thus, it is possible to suppresses a decrease in the purifying capability of the catalytic converter due to restricted layout of the exhaust passage.

In the foregoing exhaust passage structure, the exhaust flow guide may be formed by deforming a portion of the exhaust passage member. In this case, the exhaust flow guide can be provided without additional part or material and additional space for the catalytic converter.

Further, the exhaust flow guide may include a guide plate, and the exhaust passage member may include an exhaust manifold or a flange attached to the catalytic converter. Meanwhile, if the internal combustion engine is provided with a turbocharger, the exhaust passage member may include an exhaust pipe connected to the turbocharger.

### BRIEF DESCRIPTION OF THE DRAWINGS

The foregoing and/or further objects, features and advantages of the invention will become more apparent from the following description of exemplary embodiments with reference to the accompanying drawings, in which like numerals are used to represent like elements and wherein:
FIG. 1 is a longitudinal sectional view showing an exhaust passage structure according to an embodiment of the invention;
FIG. 2 is a lateral view showing a diesel engine incorporating the exhaust passage structure shown in FIG. 1; and
FIG. 3 is a longitudinal sectional view showing a conventional exhaust passage structure in which a guide plate 30 is additionally indicated.

### DETAILED DESCRIPTION OF THE EXEMPLARY EMBODIMENTS

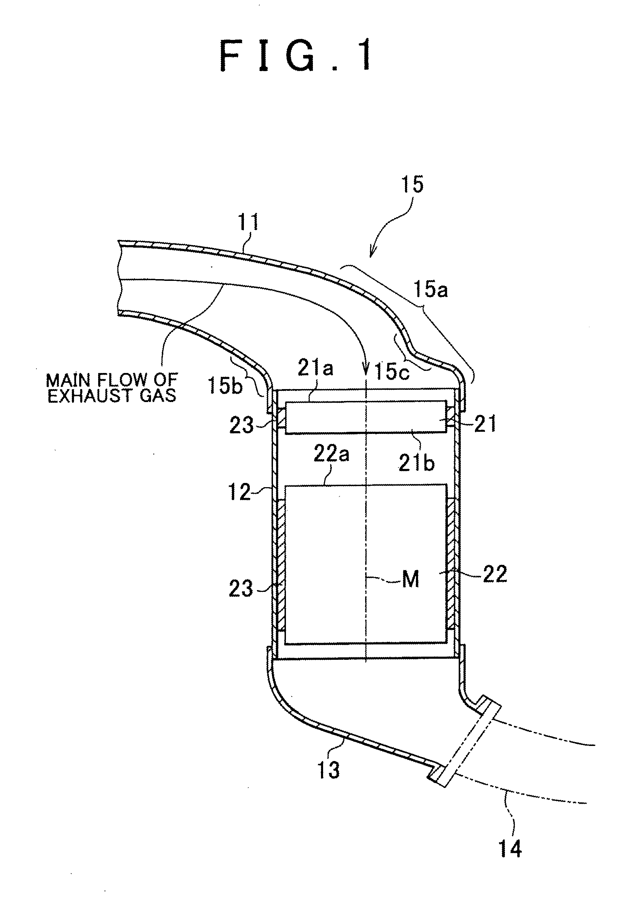

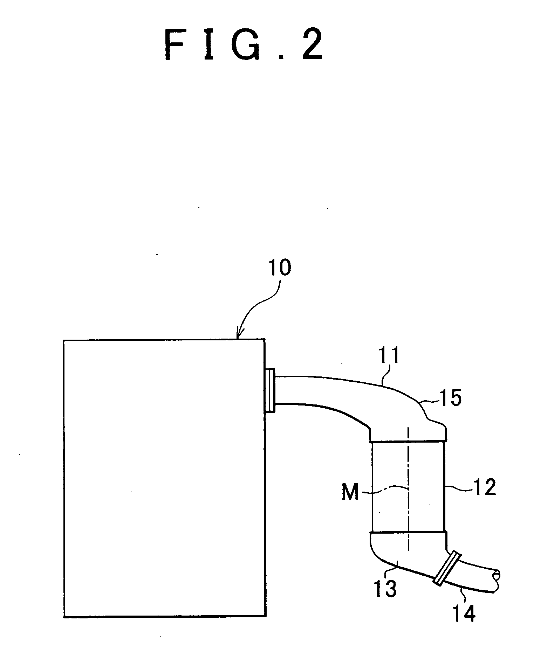

Hereinafter, an exemplary embodiment of the invention will be described with reference to FIG. 1 and FIG. 2. Referring to FIG. 2, an exhaust manifold 11 is connected to exhaust ports (not shown) of a diesel engine 10 as an internal combustion engine. A catalyst case 12 is connected to the exhaust manifold 11. The catalyst case 12 is disposed beside the diesel engine 10 such that an axis M of the catalyst case 12 extends in a substantially vertical direction. An upper end of the catalyst case 12 is connected to a downstream-side end portion of the exhaust manifold 11. A lower end of the catalyst case 12 is connected to an exhaust pipe 14 via a lower flange 13.

The exhaust manifold 11 extends from the exhaust ports of the diesel engine 10 in a substantially horizontal direction, and then bends downward at a bending portion 15 located immediately upstream of the upper end of the catalyst case 12.

Referring to FIG. 1, a deformed portion 15c serving as an exhaust flow guide is provided at an outer corner portion 15a of the bending portion 15. so as to protrude toward an inner corner portion 15b. The deformed portion 15c is formed by deforming a portion of a peripheral wall of the exhaust manifold 11 inward at the outer corner 15a. According to this structure, after the exhaust gas has been discharged from the diesel engine 10 to the exhaust manifold 11, the flow of the exhaust gas is biased to the side of the outer corner portion 15a in the bending portion 15. Then, the deformed portion 15c guides the flow of the exhaust gas toward the side of the inner corner portion 15b of the bending portion 15.

In the catalyst case 12 are provided an upstream-side catalytic converter 21 and a downstream-side catalytic converter 22, each of which has a columnar shape. The catalytic converters 21 and 22 are located close to each other and aligned along the axis M of the catalyst case 12. Each of the upstream-side catalytic converter 21 and the downstream-side catalytic converter 22 is supported by an inner peripheral surface of the catalyst case 12 via a mat 23.

The upstream-side catalytic converter 21 is a known NOx storage-reduction type catalytic converter which is produced by attaching noble metal catalyst onto a honeycomb ceramic carrier having multiple through-holes. When the upstream-side catalytic converter 21 is in an oxidizing atmosphere (i.e., atmosphere where the air-fuel ratio of the exhaust gas is higher than a stoichiometric air-fuel ratio) while the diesel engine 10 is normally operating, the upstream-side catalytic converter 21 stores NOx in the exhaust gas passing through each through-hole. Meanwhile, when the upstream-side catalytic converter 21 is in a reducing atmosphere (i.e., atmosphere where the air-fuel ratio of the exhaust gas is equal to or lower than the stoichiometric air-fuel ratio), the upstream-side catalytic converter 21 releases the stored NOx as NO, so that the NO is reduced by HC and CO. Thus, NOx is removed from the exhaust gas.

The downstream-side catalytic converter 22 is made of porous ceramic and has a monolith structure. NOx in the exhaust gas is removed by a NOx storage-reduction catalyst layer provided on the surface of each of the pores while being subjected to the oxidizing atmosphere and the reducing atmosphere. Also, in the downstream-side catalytic converter 22, particulate matter (hereinafter, referred to as "PM") in the exhaust gas is trapped in the pores, and the trapped PM is oxidized by active oxygen that is generated when NOx is stored in the high-temperature oxidizing atmosphere, and further the PM is oxidized and removed by excess oxygen that is generated when NOx is released in the reducing atmosphere.

Hereinafter, description will be made of the effects and advantages brought about by the exhaust passage structure described above. After discharged from the exhaust ports of the diesel engine 10, the exhaust gas flows in the substantially horizontal direction within the exhaust manifold 11, and then the flow direction of the exhaust gas sharply changes downward at the bending portion 15, which results in the flow of the exhaust gas being biased to the side of the outer corner portion 15a of the bending portion 15.

Subsequently, however, the biased flow of the exhaust gas is guided back towards the side of the inner corner portion 15b by the deformed portion 15c. As a result, the exhaust gas enters the upstream-side catalytic converter 21 through almost the entire area of an upstream-side end surface 21a, whereby the entire portion of the upstream-side catalytic converter 21 can be utilized to remove NOx from the exhaust gas.

After purified in the upstream-side catalytic converter 21, the exhaust gas is then discharged through a downstream-side end surface 21b, and the exhaust gas flows into the downstream-side catalytic converter 22 disposed in alignment with the upstream-side catalytic converter 21 along the axis M. At this time, too, the exhaust gas passes through almost the entire area of an upstream-side end surface 22a of the downstream-side catalytic converter 22, so that the entire portion of the downstream-side catalytic converter 22 can be utilized to remove NOx and PM from the exhaust gas. Lastly, the exhaust gas is discharged from the downstream-side catalytic converter 22 towards the exhaust pipe 14.

Accordingly, in the exhaust passage structure of the exemplary embodiment described above, although the catalytic converters 21 and 22 are provided in the catalyst case 12 beside the diesel engine 10 such that the axis M extends in a substantially vertical direction and the bending portion 15 is provided immediately upstream of the catalyst case 12, it is possible to make full use of the purifying capability of the catalytic converters 21 and 22.

Also, since the deformed portion 15c is formed by simply deforming a portion of the peripheral wall of the exhaust manifold 11 at the outer corner portion 15a, an exhaust flow guide can be provided without additional part or material and additional space for the catalyst case 12.

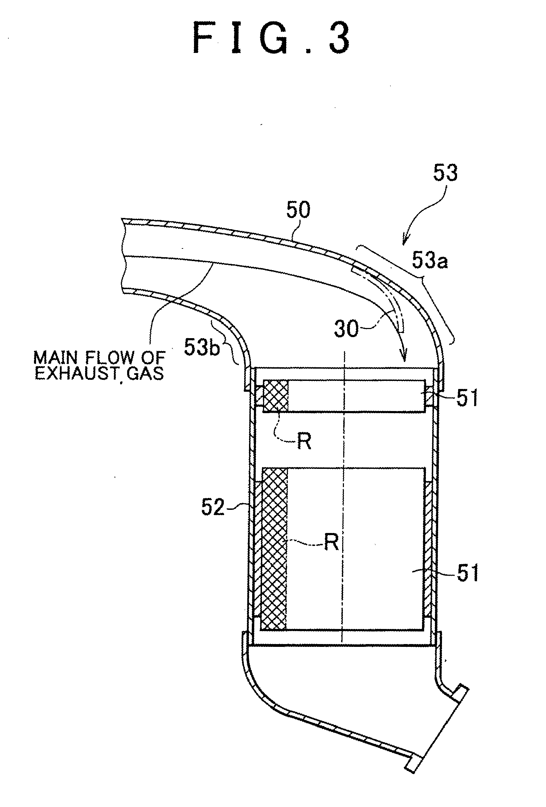

The following are exemplary modifications of the exhaust passage structure described above.
(a) Referring to FIG. 3, in place of the deformed portion 15c, the exhaust flow guide may be formed by a guide plate 30 (indicated by a double-dashed line) that is provided on the inner surface of the outer corner portion 53a in the exhaust passage. In this example, the guide plate 30 serves to guide the flow of the exhaust gas back towards the side of the inner corner portion 53b.
(b) An equivalent structure may be applied to an exhaust passage from a turbocharger in which, for example, a catalytic converter is provided in an exhaust pipe that extends from the turbine chamber of the turbocharger and bends at a position immediately upstream of the catalytic converter.
(c) An upper flange may be provided between the catalyst case 12 and the exhaust manifold 11, and the bending portion may be formed in the upper flange at a position immediately upstream of the catalyst case 12.
(d) An equivalent structure may be applied to an exhaust passage including an exhaust pipe that travels below a platform of a vehicle body and bends at a particular position below the platform of the vehicle immediately upstream of where a catalytic converter is provided.
(e)The invention may be applied to an exhaust passage of a gasoline engine.

While the invention has been described with reference to exemplary embodiments thereof, it is to be understood that the invention is not limited to the exemplary embodiments or constructions. To the contrary, the invention is intended to cover various modifications and equivalent arrangements other than described above. In addition, while the various elements of the exemplary embodiments are shown in various combinations and configurations, which are exemplary, other combinations and configurations, including more, less or only a single element, are also within the spirit and scope of the invention.

## Claims

1. An exhaust passage structure for a vehicle provided with an internal combustion engine (10), including an exhaust passage member (11) which forms a portion of an exhaust passage for an exhaust gas of the internal combustion engine (10) and which bends at a particular portion (15) thereof, and a catalytic converter that is provided in or along the exhaust passage downstream of the bending portion (15) of the exhaust passage member (11), the exhaust passage structure being **characterized by** comprising:
an exhaust flow guide (15c; 30) that is provided at the bending portion (15) to change a flow direction of the exhaust gas.

2. An exhaust passage structure according to claim 1, wherein the exhaust flow guide (15c; 30) is located in an outer side of the bending portion (15) so as to change the flow of the exhaust gas to an inner side of the bending portion (15).

3. An exhaust passage structure according to claim 1 or 2, wherein the exhaust flow guide (15c; 30) includes a deformed portion (15c) of the exhaust passage member (11).

4. An exhaust passage structure according to claim 1 or 2, wherein the exhaust flow guide (15c; 30) includes a guide plate (30).

5. An exhaust passage structure according to any one of claims 1 to 4, wherein the exhaust passage member (11) includes an exhaust manifold (11).

6. An exhaust passage structure according to any one of claims 1 to 4, wherein the exhaust passage member (11) includes an upper flange that is attached to the catalytic converter (21, 22).

7. An exhaust passage structure according to any one of claims 1 to 4, wherein the internal combustion engine (10) includes a turbocharger; and
the exhaust passage member (11) includes an exhaust pipe connected to the turbocharger.
